(19) 

Europäisches
Patentamt
European
Patent Office
Office européen
des brevets

(11) **EP 4 300 695 A1**

(12) **EUROPEAN PATENT APPLICATION**
published in accordance with Art. 153(4) EPC

(43) Date of publication:
**03.01.2024 Bulletin 2024/01**

(21) Application number: **22759316.7**

(22) Date of filing: **02.02.2022**

(51) International Patent Classification (IPC):
*H01M 50/403* (2021.01)    *H01G 11/00* (2013.01)
*H01G 11/52* (2013.01)    *H01M 4/02* (2006.01)
*H01M 4/13* (2010.01)    *H01M 50/414* (2021.01)
*H01M 50/434* (2021.01)    *H01M 50/443* (2021.01)
*H01M 50/446* (2021.01)    *H01M 50/451* (2021.01)
*H01M 50/457* (2021.01)    *H01M 50/489* (2021.01)

(52) Cooperative Patent Classification (CPC):
**H01G 11/00; H01G 11/52; H01M 4/02; H01M 4/13;
H01M 50/403; H01M 50/414; H01M 50/434;
H01M 50/443; H01M 50/446; H01M 50/451;
H01M 50/457; H01M 50/489;** Y02E 60/10

(86) International application number:
**PCT/JP2022/004119**

(87) International publication number:
**WO 2022/181275 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021030859**

(71) Applicant: **Zeon Corporation
Tokyo 100-8246 (JP)**

(72) Inventors:
• **TAKAGI Kazuki
Tokyo 100-8246 (JP)**
• **KANEDA Takuya
Tokyo 100-8246 (JP)**

(74) Representative: **Maiwald GmbH
Elisenhof
Elisenstraße 3
80335 München (DE)**

(54) **COMPOSITION FOR ELECTROCHEMICAL ELEMENT FUNCTIONAL LAYERS, FUNCTIONAL LAYER FOR ELECTROCHEMICAL ELEMENTS, MULTILAYER BODY FOR ELECTROCHEMICAL ELEMENTS, AND ELECTROCHEMICAL ELEMENT**

(57) Provided is a composition for an electrochemical device functional layer with which it is possible to form a functional layer for an electrochemical device that has excellent wet adhesiveness and that can cause an electrochemical device to display high output characteristics. The composition for an electrochemical device functional layer contains a particulate polymer having a volume-average particle diameter of not less than 0.5 $\mu$m and not more than 10 $\mu$m and a degree of swelling in electrolyte solution of 120% or less.

**EP 4 300 695 A1**

**Description**

TECHNICAL FIELD

The present disclosure relates to a composition for an electrochemical device functional layer, a functional layer for an electrochemical device, a laminate for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, generally includes battery members such as a positive electrode, a negative electrode, and a separator that isolates the positive electrode and the negative electrode from each other and prevents short circuiting between the positive and negative electrodes.

In recent years, further improvements to electrochemical device members such as positive electrodes, negative electrodes, and separators have been investigated with the aim of achieving even higher lithium ion secondary battery performance. Specifically, the stacking of a layer (functional layer) for displaying an expected function such as heat resistance or adhesiveness on a separator substrate or an electrode substrate has been attempted. Moreover, various investigations have been made in relation to compositions for functional layers that are used in functional layer formation from a viewpoint of enhancing functional layers and further increasing the performance of electrochemical devices such as lithium ion secondary batteries.

Specifically, in Patent Literature (PTL) 1 and 2, for example, reduction of durability of a functional layer is inhibited and an increase of internal resistance is suppressed so as to improve low-temperature output characteristics of an electrochemical device by using a particulate polymer having a degree of swelling in non-aqueous electrolyte solution of a factor of 2 or less as a binder that is contained in a composition for a functional layer.

CITATION LIST

Patent Literature

PTL 1: JP2015-185353A
PTL 2: JP2017-084589A

SUMMARY

(Technical Problem)

However, there is room for improvement of the conventional composition for a functional layer described above in terms of improving adhesiveness of a functional layer after immersion in electrolyte solution (hereinafter, also referred to as "wet adhesiveness") and also in terms of increasing ion permeability of a functional layer so as to improve output characteristics.

Accordingly, an object of the present disclosure is to provide a composition for an electrochemical device functional layer with which it is possible to form a functional layer for an electrochemical device that has excellent wet adhesiveness and that can cause an electrochemical device to display high output characteristics.

(Solution to Problem)

The inventors conducted diligent investigation with the aim of solving the problems set forth above. The inventors discovered that by using a composition for an electrochemical device functional layer that contains a particulate polymer having a volume-average particle diameter and a degree of swelling in electrolyte solution that are both within specific ranges, it is possible to form a functional layer for an electrochemical device that has excellent wet adhesiveness and can cause an electrochemical device to display high output characteristics, and, in this manner, completed the present disclosure.

Specifically, the present disclosure aims to advantageously solve the problems set forth above, and a presently disclosed composition for an electrochemical device functional layer comprises a particulate polymer having a volume-average particle diameter of not less than 0.5 μm and not more than 10 μm and a degree of swelling in electrolyte solution of 120% or less. Through the inclusion of a particulate polymer having the volume-average particle diameter and degree of swelling in electrolyte solution set forth above, it is possible to form a functional layer for an electrochemical device that has excellent wet adhesiveness and can cause an electrochemical device to display high output characteristics.

Note that the "volume-average particle diameter" and "degree of swelling in electrolyte solution" referred to in the present disclosure can be measured by methods described in the EXAMPLES section of the present specification.

In the presently disclosed composition for an electrochemical device functional layer, the particulate polymer preferably includes a hydrogenated polymer. By using a particulate polymer that includes hydrogenated polymer, it is possible to further enhance wet adhesiveness of a functional layer and output characteristics of an electrochemical device.

In the presently disclosed composition for an electrochemical device functional layer, the hydrogenated polymer preferably has a percentage hydrogenation of 95% or more. When the percentage hydrogenation is 95% or more, the degree of swelling in electrolyte solution of the particulate polymer can be reduced, and wet adhesiveness of a functional layer and output characteristics of an electrochemical device can be further enhanced.

Note that the "percentage hydrogenation" referred to in the present disclosure is the percentage hydrogenation relative to all carbon-carbon unsaturated bonds that were included in the polymer that was hydrogenated (inclusive of aromatic ring double bonds in a case in which the polymer includes an aromatic ring) and can be measured by nuclear magnetic resonance (NMR) .

In the presently disclosed composition for an electrochemical device functional layer, the particulate polymer preferably has a glass-transition temperature of not lower than 0°C and not higher than 80°C. When the glass-transition temperature of the particulate polymer is within the range set forth above, dry adhesiveness of a functional layer (adhesiveness of a functional layer in a state in which the functional layer is not immersed in electrolyte solution, which can influence adhesive between battery members via the functional layer in a production process of an electrochemical device) can be improved, and output characteristics of an electrochemical device can be further enhanced.

Note that the "glass-transition temperature" referred to in the present disclosure can be measured by a method described in the EXAMPLES section of the present specification. Also note that in a case in which multiple glass-transition temperatures are observed such as in the case of a particulate polymer that is a block copolymer, the "glass-transition temperature" referred to in the present disclosure is a value determined by weighted averaging from the proportions constituted by structures giving these glass-transition temperatures in the particulate polymer. Specifically, in the case of a block copolymer, the glass-transition temperature can be calculated through weighted averaging of the glass-transition temperature of each block with the content of that block. More specifically, in the case of a block copolymer including a block A and a block B, the glass-transition temperature can be calculated by a formula:

$$\text{Glass-transition temperature of block copolymer} = (\text{Glass-transition temperature of block A} \times \text{Content of block A} + \text{Glass-transition temperature of block B} \times \text{Content of block B})/(\text{Content of block A} + \text{Content of block B}).$$

The presently disclosed composition for an electrochemical device functional layer preferably further comprises another polymer differing from the particulate polymer. The inclusion of another polymer makes it possible to inhibit detachment of the particulate polymer from a functional layer.

In the presently disclosed composition for an electrochemical device functional layer, the other polymer preferably has a lower glass-transition temperature than the particulate polymer. When the glass-transition temperature of the other polymer is lower than the glass-transition temperature of the particulate polymer, dry adhesiveness of a functional layer can be further increased.

The presently disclosed composition for an electrochemical device functional layer preferably further comprises non-conductive heat-resistant particles. The inclusion of non-conductive heat-resistant particles makes it possible to form a functional layer having excellent heat resistance and to increase the heat resistance of an electrochemical device.

Moreover, the present disclosure aims to advantageously solve the problems set forth above, and a presently disclosed functional layer for an electrochemical device is formed using any one of the compositions for an electrochemical device functional layer set forth above. A functional layer for an electrochemical device that is formed using the composition for an electrochemical device functional layer set forth above has excellent wet adhesiveness and can cause an electrochemical device to display high output characteristics.

Furthermore, the present disclosure aims to advantageously solve the problems set forth above, and a presently disclosed laminate for an electrochemical device comprises the functional layer for an electrochemical device set forth above at one side or both sides of a substrate. A laminate for an electrochemical device that includes the functional layer for an electrochemical device set forth above has excellent wet adhesiveness and can cause an electrochemical device to display high output characteristics, and thus is suitable as an electrochemical device member.

In the presently disclosed laminate for an electrochemical device, the substrate can be a separator substrate. A laminate for an electrochemical device in which the substrate is a separator substrate can suitably be used as a separator of an electrochemical device.

Also, the present disclosure aims to advantageously solve the problems set forth above, and a presently disclosed electrochemical device comprises any one of the laminates for an electrochemical device set forth above. An electrochemical device that includes the laminate for an electrochemical device set forth above can display high output characteristics and has long service life.

(Advantageous Effect)

According to the present disclosure, a functional layer for an electrochemical device that has excellent wet adhesiveness and can cause an electrochemical device to display high output characteristics and a composition for an electrochemical device functional layer that can form this functional layer for an electrochemical device are obtained.

Moreover, according to the present disclosure, a laminate for an electrochemical device that has excellent wet adhesiveness and that can cause an electrochemical device to display high output characteristics is obtained.

Furthermore, according to the present disclosure, an electrochemical device that has high output characteristics and long service life is obtained.

DETAILED DESCRIPTION

The following provides a detailed description of embodiments of the present disclosure. The presently disclosed composition for an electrochemical device functional layer is used in formation of a functional layer for an electrochemical device that is included in the presently disclosed laminate for an electrochemical device. Moreover, the presently disclosed laminate for an electrochemical device includes a functional layer that is formed using the presently disclosed composition for an electrochemical device functional layer. Furthermore, the presently disclosed electrochemical device includes at least the presently disclosed laminate for an electrochemical device.

(Composition for electrochemical device functional layer)

The presently disclosed composition for an electrochemical device functional layer contains a specific particulate polymer and can further contain one or more selected from the group consisting of another polymer, non-conductive heat-resistant particles, other components, and a dispersion medium such as water. By using the presently disclosed composition for a functional layer, it is possible to form a functional layer for an electrochemical device that has excellent wet adhesiveness and can cause an electrochemical device to display high output characteristics.

<Particulate polymer>

The particulate polymer can function as a binder in a functional layer formed using the composition for a functional layer and can display good adhesive strength particularly after the functional layer is immersed in electrolyte solution.

In the present disclosure, the particulate polymer is required to have a volume-average particle diameter of not less than 0.5 $\mu$m and not more than 10 $\mu$m and a degree of swelling in electrolyte solution of 120% or less. As a result of the particulate polymer having a low degree of swelling in electrolyte solution of 120% or less in this manner, swelling and softening of the particulate polymer upon immersion in electrolyte solution can be inhibited, which makes it possible for the particulate polymer to sufficiently display adhesive strength in electrolyte solution and can inhibit reduction of voids in a functional layer and reduction of ion permeability caused by an increase in volume of the particulate polymer that accompanies swelling. Moreover, as a result of the volume-average particle diameter of the particulate polymer being 0.5 $\mu$m or more, wet adhesiveness and dry adhesiveness can be increased. Furthermore, as a result of the volume-average particle diameter of the particulate polymer being 10 $\mu$m or less, detachment from a functional layer can be inhibited, and the particulate polymer can be caused to display the expected function thereof. Consequently, it is possible to cause an electrochemical device that includes a functional layer formed using the composition for a functional layer to display high output characteristics, and it is also possible to inhibit deformation of the electrochemical device caused by expansion and contraction of an electrode active material in accompaniment to charging and discharging and to improve a post-cycling test capacity maintenance rate of the electrochemical device (i.e., extend service life).

[Volume-average particle diameter]

The volume-average particle diameter of the particulate polymer is preferably 1 μm or more, and more preferably 2 μm or more from a viewpoint of further increasing wet adhesiveness and dry adhesiveness of a functional layer, and is preferably 8 μm or less, and more preferably 6 μm or less from a viewpoint of further inhibiting detachment of the particulate polymer from a functional layer.

[Degree of swelling in electrolyte solution]

The degree of swelling in electrolyte solution of the particulate polymer is preferably 115% or less from a viewpoint of further increasing wet adhesiveness of a functional layer and further inhibiting reduction of ion permeability of a functional layer. Note that the degree of swelling in electrolyte solution of the particulate polymer is normally 100% or more, and is preferably more than 100%.

[Glass-transition temperature]

The glass-transition temperature of the particulate polymer is preferably 0°C or higher, more preferably 10°C or higher, even more preferably 30°C or higher, and particularly preferably 50°C or higher, and is preferably 80°C or lower, and more preferably 70°C or lower. When the glass-transition temperature of the particulate polymer is not lower than any of the lower limits set forth above, deformation of the particulate polymer and reduction of voids in a functional layer can be inhibited, and a high level of ion permeability of a functional layer can be ensured. Moreover, when the glass-transition temperature of the particulate polymer is not higher than any of the upper limits set forth above, dry adhesiveness of a functional layer can be further increased.

[Type of polymer]

A polymer that constitutes the particulate polymer may be a random polymer, may be a block polymer, or may be a hydrogenated product of either thereof (hydrogenated polymer) without any specific limitations. In particular, the polymer that constitutes the particulate polymer is preferably a hydrogenated polymer, more preferably a hydrogenated polymer having a percentage hydrogenation of 95% or more, and even more preferably a hydrogenated polymer having a percentage hydrogenation of 98% or more. When the hydrogenated polymer that constitutes the particulate polymer is a hydrogenated polymer, and particularly when this polymer is a hydrogenated polymer having a percentage hydrogenation that is not less than any of the lower limits set forth above, the degree of swelling in electrolyte solution of the particulate polymer can be reduced, and wet adhesiveness of a functional layer and output characteristics of an electrochemical device can be further enhanced.

[Chemical composition of polymer]

The polymer that constitutes the particulate polymer is preferably a polymer having a cyclic hydrocarbon structure, and is more preferably a polymer having a cyclic saturated hydrocarbon structure.
The polymer having a cyclic saturated hydrocarbon structure may be a polymer (addition polymer or ring-opened polymer) obtained using a cycloolefin compound as a monomer or a hydrogenated product thereof, or may be a hydrogenated product of a polymer obtained using an aromatic vinyl compound as a monomer, for example, without any specific limitations. In particular, a hydrogenated product of a ring-opened polymer obtained using a cycloolefin compound as a monomer and a hydrogenated product of a polymer obtained using an aromatic vinyl compound as a monomer are preferable.
The cycloolefin compound is not specifically limited and examples thereof include:

norbornenes that are unsubstituted or include an alkyl group such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene;
norbornenes that include an alkenyl group such as 5-ethylidenenorbornene, 5-vinylnorbornene, 5-propenylnorbornene, 5-cyclohexenylnorbornene, and 5-cyclopentenylnorbornene;
norbornenes that include an aromatic ring such as 5-phenylnorbornene;
norbornenes that include an oxygen atom-containing polar group such as 5-methoxycarbonylnorbornene, 5-ethoxycarbonylnorbornene, 5-methyl-5-methoxycarbonylnorbornene, 5-methyl-5-ethoxycarbonylnorbornene, norbornenyl-2-methylpropionate, norbornenyl-2-methyloctanate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene;

norbornenes that include a nitrogen atom-containing polar group such as 5-cyanonorbornene;

polycyclic norbornenes including three or more rings that do not include an aromatic ring structure such as dicyclopentadiene, methyldicyclopentadiene, and tricyclo[5.2.1.0$^{2,6}$]dec-8-ene;

polycyclic norbornenes including three or more rings that include an aromatic ring such as tetracyclo[9.2.1.0$^{2,10}$.0$^{3,8}$]tetradeca-3,5,7,12-tetraene (also referred to as 1,4-methano-1,4,4a,9a-tetrahydro-9H-fluorene) and tetracyclo[10.2.1.0$^{2,11}$.0$^{4,9}$]pentadeca-4,6,8,13-tetraene (also referred to as 1,4-methano-1,4,4a,9,9a,10-hexahydroanthracene);

tetracyclododecenes that are unsubstituted or include an alkyl group such as tetracyclododecene, 8-methyltetracyclododecene, 8-ethyltetracyclododecene, 8-cyclohexyltetracyclododecene, 8-cyclopentyltetracyclododecene, and 8-methoxycarbonyl-8-methyltetracyclo[4.4.0.1$^{2,5}$.1$^{7,10}$]-3-dodecene;

tetracyclododecenes that include a double bond outside of a ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene;

tetracyclododecenes that include an aromatic ring such as 8-phenyltetracyclododecene;

tetracyclododecenes that include an oxygen atom-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride;

tetracyclododecenes that include a nitrogen atom-containing substituent such as 8-cyanotetracyclododecene and tetracyclododecene-8,9-dicarboxylic acid imide;

tetracyclododecenes that include a halogen atom-containing substituent such as 8-chlorotetracyclododecene;

tetracyclododecenes that include a silicon atom-containing substituent such as 8-trimethoxysilyltetracyclododecene; and

hexacycloheptadecenes such as a Diels-Alder adduct of a tetracyclododecene such as described above and cyclopentadiene.

Of these examples, a non-polar norbornene-based monomer is preferable as the cycloolefin compound, and a norbornene that is unsubstituted or includes an alkyl group (for example, norbornene or 8-ethyltetracyclododecene), a norbornene that includes an alkenyl group (for example, ethylidenetetracyclododecene (8-ethylidenetetracyclododecene)), dicyclopentadiene, a norbornene derivative that includes an aromatic ring (for example, tetracyclo[9.2.1.0$^{2,10}$.0$^{3,8}$]tetradeca-3,5,7,12-tetraene (also referred to as 1,4-methano-1,4,4a,9a-tetrahydro-9H-fluorene)), or a tetracyclododecene that is unsubstituted or includes an alkyl group (for example, tetracyclododecene or 8-methoxycarbonyl-8-methyltetracyclo[4.4.0.1$^{2,5}$.1$^{7,10}$]-3-dodecene) is more preferable as the cycloolefin compound.

Note that the polymer obtained using a cycloolefin compound as a monomer that can optionally be hydrogenated may be a polymer obtained using only a cycloolefin compound as a monomer or may be a polymer obtained using a cycloolefin compound and a copolymerizable compound other than a cycloolefin compound as monomers, but is preferably a polymer obtained using only a cycloolefin compound as a monomer.

Moreover, the polymer obtained using a cycloolefin compound as a monomer that can optionally be hydrogenated is preferably a polymer obtained using tetracyclododecene, dicyclopentadiene, and norbornene as monomers, and more preferably a ring-opened polymer obtained using tetracyclododecene, dicyclopentadiene, and norbornene as monomers.

The proportion constituted by structural units derived from tetracyclododecene in the polymer is preferably 15 mass% or more, and more preferably 25 mass% or more, and is preferably 40 mass% or less, and more preferably 35 mass% or less. The proportion constituted by structural units derived from dicyclopentadiene in the polymer is preferably 15 mass% or more, and more preferably 25 mass% or more, and is preferably 40 mass% or less, and more preferably 35 mass% or less. The proportion constituted by structural units derived from norbornene in the polymer is preferably 30 mass% or more, and more preferably 40 mass% or more, and is preferably 60 mass% or less, and more preferably 50 mass% or less.

Note that the polymer obtained using a cycloolefin compound as a monomer can be produced by a method described in JP3235219B2 or a method described in JP6590156B2, for example, without any specific limitations.

Moreover, the aromatic vinyl compound is not specifically limited and examples thereof include styrene; alkyl-substituted styrenes such as α-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; and halogen-substituted styrenes such as 4-chlorostyrene and 2,4-dichlorostyrene. Of these aromatic vinyl compounds, styrene is preferable.

Note that the polymer obtained using an aromatic vinyl compound as a monomer may be a polymer obtained using only an aromatic vinyl compound as a monomer or may be a polymer obtained using an aromatic vinyl compound and a copolymerizable compound other than an aromatic vinyl compound as monomers, but is preferably a polymer obtained using an aromatic vinyl compound and a copolymerizable compound other than an aromatic vinyl compound as monomers.

Moreover, the polymer obtained using an aromatic vinyl compound and a copolymerizable compound other than an aromatic vinyl compound as monomers may be a random polymer or may be a block polymer, but is preferably a block polymer.

The copolymerizable compound other than an aromatic vinyl compound may be an aliphatic conjugated diene compound such as 1,3-butadiene, isoprene, 2,3-dimethyl-1,3-butadiene, or 1,3-pentadiene without any specific limitations. Of these compounds, 1,3-butadiene and isoprene are preferable.

The proportion constituted by structural units derived from the aromatic vinyl compound in the polymer is preferably 20 mass% or more, and more preferably 25 mass% or more, and is preferably 60 mass% or less, and more preferably 40 mass% or less. The proportion constituted by structural units derived from the aliphatic conjugated diene compound in the polymer is preferably 30 mass% or more, and more preferably 50 mass% or more, and is preferably 80 mass% or less, and more preferably 75 mass% or less.

Moreover, a hydrogenated product of a polymer obtained using an aromatic vinyl compound and a copolymerizable compound other than an aromatic vinyl compound as monomers can be produced by a method described in JP6435733B2, for example, without any specific limitations.

<Other polymer>

The other polymer is a polymer differing from the particulate polymer and can function as a binder in a functional layer formed using the composition for a functional layer.

[Chemical composition]

The other polymer may be a known polymer that is used as a binder such as a conjugated diene polymer, an acrylic polymer, polyvinylidene fluoride (PVDF), or polyvinyl alcohol (PVOH), for example. One other polymer may be used individually, or two or more other polymers may be used in combination. The other polymer is preferably a polymer such as a conjugated diene polymer, an acrylic polymer, or polyvinylidene fluoride (PVDF) that is water-insoluble and can be dispersed in a dispersion medium such as water, more preferably a conjugated diene polymer or an acrylic polymer, and even more preferably an acrylic polymer. Note that in the case of a functional layer that is to be adopted at the surface of a positive electrode in an electrochemical device, it is preferable that the other polymer is a polymer other than a conjugated diene polymer.

Also note that when a polymer is referred to as "water-insoluble" in the present disclosure, this means that when 0.5 g of the polymer is dissolved in 100 g of water at a temperature of 25°C, insoluble content is 90 mass% or more.

The conjugated diene polymer is a polymer that includes a conjugated diene monomer unit. Specific examples of the conjugated diene polymer include, but are not specifically limited to, a copolymer including an aromatic vinyl monomer unit and an aliphatic conjugated diene monomer unit such as a styrene-butadiene copolymer (SBR); butadiene rubber (BR); acrylic rubber (NBR) (copolymer including an acrylonitrile unit and a butadiene unit); and hydrogenated products thereof.

The acrylic polymer is a polymer that includes a (meth)acrylic acid ester monomer unit.

Note that one of these other polymers may be used individually, or two or more of these other polymers may be used in combination in a freely selected ratio.

The acrylic polymer that can preferably be used as the other polymer may be a polymer that includes a cross-linkable monomer unit, a (meth)acrylic acid ester monomer unit, and an acidic group-containing monomer unit, for example, without any specific limitations.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. By setting the proportion constituted by (meth)acrylic acid ester monomer units as not less than the lower limit of any of the ranges set forth above, adhesiveness of a functional layer can be increased. Moreover, by setting this proportion as not more than any of the upper limits, electrochemical characteristics of an electrochemical device including a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. By setting the proportion constituted by cross-linkable monomer units as not less than any of the lower limits set forth above, electrochemical characteristics of an electrochemical device including a functional layer can be further enhanced. Moreover, by setting the proportion constituted by cross-linkable monomer units as not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. By setting the proportion constituted by acid group-containing monomer units as not less than any of the lower limits set forth above, dispersibility of the other polymer in the composition for a functional layer and in a functional layer can be increased, and electrochemical characteristics of an electrochemical device including a functional layer can be sufficiently enhanced. Moreover, by setting the proportion constituted by acid group-containing monomer units as not more than any of the upper limits set forth above, residual water content in a functional layer can be reduced, and electrochemical characteristics of an electrochemical device can be sufficiently enhanced.

Note that the acrylic polymer may include other monomer units.

[Glass-transition temperature]

The glass-transition temperature of the other polymer is preferably lower than the glass-transition temperature of the particulate polymer. When the glass-transition temperature of the other polymer is lower than the glass-transition temperature of the particulate polymer, dry adhesiveness of a functional layer can be further increased.

Moreover, the glass-transition temperature of the other polymer is preferably -100°C or higher, more preferably -90°C or higher, and even more preferably -80°C or higher, and is preferably lower than 30°C, more preferably 20°C or lower, and even more preferably 15°C or lower. When the glass-transition temperature of the other polymer is not lower than any of the lower limits set forth above, dry adhesiveness and strength of a functional layer can be increased. On the other hand, when the glass-transition temperature of the other polymer is not higher than any of the upper limits set forth above, flexibility of a functional layer can be increased.

[Content of other polymer]

The content of the other polymer is preferably 0.1 parts by mass or more, more preferably 0.2 parts by mass or more, and even more preferably 0.5 parts by mass or more per 100 parts by mass, in total, of the subsequently described non-conductive heat-resistant particles and the particulate polymer, and is preferably 20 parts by mass or less, more preferably 15 parts by mass or less, and even more preferably 10 parts by mass or less per 100 parts by mass, in total, of the non-conductive heat-resistant particles and the particulate polymer. When the content of the other polymer is not less than any of the lower limits set forth above, detachment of the particulate polymer and the non-conductive heat-resistant particles from a functional layer can be sufficiently prevented, and dry adhesiveness and wet adhesiveness of a functional layer can be sufficiently increased. On the other hand, when the content of the other polymer in a functional layer is not more than any of the upper limits set forth above, reduction of ion conductivity of the functional layer can be inhibited, and deterioration of output characteristics of an electrochemical device can be inhibited.

Note that the other polymer can be produced through polymerization of a monomer composition containing the monomers described above, carried out in an aqueous solvent such as water, for example, without any specific limitations. The proportion constituted by each monomer in the monomer composition is normally the same as the proportion constituted by each monomer unit in the other polymer.

The method of polymerization of the other polymer may be a suspension polymerization method, an emulsion polymerization and aggregation method, a pulverization method, or the like, for example, without any specific limitations. Moreover, radical polymerization, living radical polymerization, or the like can be adopted as the polymerization reaction.

Although the other polymer may have a particulate form or may have a non-particulate form, it is preferable that the other polymer has a particulate form from a viewpoint of good inhibition of detachment of components contained in a functional layer.

<Non-conductive heat-resistant particles>

The non-conductive heat-resistant particles may be fine particles formed of an inorganic material (i.e., inorganic fine particles) or fine particles formed of an organic material (i.e., organic fine particles) that are electrochemically stable and are stably present in the environment of use of an electrochemical device without any specific limitations.

Note that inorganic fine particles or organic fine particles may be used individually as the non-conductive heat-resistant particles, or inorganic fine particles and organic fine particles may be used in combination as the non-conductive heat-resistant particles.

[Inorganic fine particles]

Examples of inorganic fine particles include particles of inorganic oxides such as aluminum oxide (alumina, $Al_2O_3$), hydrous aluminum oxide (boehmite, AlOOH), gibbsite ($Al(OH)_3$), silicon oxide, magnesium oxide (magnesia), magnesium hydroxide, calcium oxide, titanium oxide (titania), barium titanate ($BaTiO_3$), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, or the like as necessary. Note that one type of inorganic fine particles may be used individually, or two or more types of inorganic fine particles may be used in combination.

[Organic fine particles]

The organic fine particles are fine particles formed of a polymer that differs from the specific particulate polymer set forth above and the other polymer and that does not display adhesiveness.
Examples of organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamide imide, melamine resin, phenolic resin, and benzoguanamine-formaldehyde condensate; particles of heat-resistant polymers such as polysulfone, polyacrylonitrile, polyaramid, polyacetal, and thermoplastic polyimide; modified products and derivatives of any of the preceding examples; and heat-resistant organic particles disclosed in WO2019/065416A1. Note that one type of organic fine particles may be used individually, or two or more types of organic fine particles may be used in combination.
Note that the organic fine particles are formed of a polymer that does not display adhesiveness as previously described. Specifically, the polymer constituting the organic fine particles preferably has a glass-transition temperature of 150°C or higher.
Of the non-conductive heat-resistant particles described above, inorganic fine particles and organic fine particles formed of a polymer having a glass-transition temperature of 150°C or higher are preferable from a viewpoint of further improving heat resistance, inorganic fine particles are more preferable, and particles formed of alumina (alumina particles), particles formed of boehmite (boehmite particles), particles formed of barium sulfate (barium sulfate particles), and particles formed of magnesium hydroxide (magnesium hydroxide particles) are even more preferable.

[Properties of non-conductive heat-resistant particles]

The volume-average particle diameter of the non-conductive heat-resistant particles is preferably 0.1 μm or more, more preferably 0.2 μm or more, and even more preferably 0.3 μm or more, and is preferably 1.0 μm or less, more preferably 0.9 μm or less, and even more preferably 0.8 μm or less. When the volume-average particle diameter of the non-conductive heat-resistant particles is 0.1 μm or more, reduction of ion conductivity of a functional layer caused by excessively dense packing of the non-conductive heat-resistant particles in the functional layer can be inhibited, and an electrochemical device can be caused to display excellent output characteristics. On the other hand, when the volume-average particle diameter of the non-conductive heat-resistant particles is 1.0 μm or less, an electrochemical device member including a functional layer can be caused to sufficiently display excellent heat resistance even when a thin functional layer is adopted. Consequently, heat resistance of an electrochemical device member can be sufficiently ensured while also increasing the capacity of an electrochemical device.

[Content of non-conductive heat-resistant particles]

The content of the non-conductive heat-resistant particles in the composition for a functional layer is preferably an amount such that a mixing ratio of the non-conductive heat-resistant particles and the particulate polymer, in terms of volume ratio (non-conductive heat-resistant particles/particulate polymer), is 1.2 or more, more preferably an amount such that this mixing ratio is 1.5 or more, and even more preferably an amount such that this mixing ratio is 2.0 or more, and is preferably an amount such that this mixing ratio is 99 or less, more preferably an amount such that this mixing ratio is 20 or less, even more preferably an amount such that this mixing ratio is 15 or less, and particularly preferably an amount such that this mixing ratio is 10 or less. When the mixing ratio of the non-conductive heat-resistant particles and the particulate polymer in terms of volume ratio is within any of the ranges set forth above, this results in a better balance of heat resistance and adhesiveness of a functional layer.

<Other components>

The composition for a functional layer may contain any other components besides the components described above. Known additives such as dispersants, viscosity modifiers, and wetting agents, for example, can be used as other components without any specific limitations so long as they do not affect electrochemical reactions in an electrochemical device. One of these other components may be used individually, or two or more of these other components may be used in combination.

<Production method of composition for electrochemical device functional layer>

No specific limitations are placed on the method by which the composition for a functional layer is produced. For example, the composition for a functional layer can be produced by mixing the above-described particulate polymer, other polymer, non-conductive heat-resistant particles, water as a dispersion medium, and other components. Note that in a case in which the particulate polymer or the other polymer is produced through polymerization of a monomer composition in an aqueous solvent, the particulate polymer or other polymer may be mixed with other components while still in the form of a water dispersion. Moreover, in a case in which the particulate polymer or the other polymer is mixed in the form of a water dispersion, water in this water dispersion may be used as the dispersion medium.

Although no specific limitations are placed on the mixing method of these components, the mixing is preferably performed using a disperser as a mixing device in order to efficiently disperse the components. The disperser is preferably a device that can homogeneously disperse and mix the components. Examples of dispersers that can be used include a ball mill, a sand mill, a pigment disperser, a grinding machine, an ultrasonic disperser, a homogenizer, and a planetary mixer.

Moreover, it is preferable that the specific particulate polymer described above is premixed with a dispersant such as a nonionic surfactant, an anionic surfactant, a cationic surfactant, or an amphoteric surfactant in advance of being mixed with the non-conductive heat-resistant particles and the other polymer. Of these examples, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; salts of alkylbenzenesulfonic acids such as sodium dodecylbenzenesulfonate, sodium laurylbenzenesulfonate, and sodium hexadecylbenzenesulfonate; and salts of aliphatic sulfonic acids such as sodium laurylsulfonate, sodium dodecylsulfonate, and sodium tetradecylsulfonate. The amount of the dispersant is preferably 0.01 parts by mass or more, more preferably 0.05 parts by mass or more, and even more preferably 0.1 parts by mass or more relative to 100 parts by mass of the particulate polymer, and is preferably 0.5 parts by mass or less, more preferably 0.4 parts by mass or less, and even more preferably 0.3 parts by mass or less relative to 100 parts by mass of the particulate polymer. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, an increase of internal resistance of an obtained electrochemical device can be inhibited, and deterioration of output characteristics can be inhibited.

(Functional layer for electrochemical device and laminate for electrochemical device)

The presently disclosed functional layer for an electrochemical device is a layer that is formed using the composition for a functional layer set forth above and can be formed by, for example, applying the composition for a functional layer set forth above onto the surface (one side or both sides) of a suitable substrate to form a coating film and subsequently drying the coating film that is formed. In other words, the functional layer for an electrochemical device is formed of a dried product of the composition for a functional layer set forth above, contains at least the previously described particulate polymer, and optionally further contains one or more selected from the group consisting of another polymer, non-conductive heat-resistant particles, and other components. Note that components contained in the functional layer are components that were contained in the composition for a functional layer set forth above, and the preferred ratio of these components is the same as the preferred ratio of the components in the composition for a functional layer. The functional layer for an electrochemical device has excellent wet adhesiveness and can enhance output characteristics of an electrochemical device obtained using the functional layer as a result of being formed using the composition for a functional layer set forth above. Moreover, a laminate that has the functional layer for an electrochemical device formed at one side or both sides of a substrate can be used as the presently disclosed laminate for an electrochemical device, and this laminate has excellent wet adhesiveness and can enhance output characteristics of an electrochemical device.

<Substrate>

No limitations are placed on the substrate onto which the composition for a functional layer is applied. For example, a coating film of the composition for a functional layer may be formed on the surface of a releasable substrate, this coating film may be dried to form a functional layer, and then the releasable substrate may be peeled from the functional layer. The functional layer that is peeled from the releasable substrate in this manner can be used as a free-standing film in formation of a member of an electrochemical device.

However, it is preferable that a separator substrate or an electrode substrate is used as the substrate from a viewpoint of omitting a step of peeling the functional layer and increasing production efficiency of an electrochemical device member. A laminate having the functional layer formed at one side or both sides of a separator substrate can be used well as a separator including the functional layer, whereas a laminate having the functional layer formed at one side or both sides of an electrode substrate can be used well as an electrode including the functional layer.

[Separator substrate]

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.
Of these examples, a microporous membrane formed of a polyolefinic resin is preferable from a viewpoint that this makes it possible to increase the ratio of electrode active material inside an electrochemical device and increase the volumetric capacity.
Although the separator substrate may be of any thickness, the thickness thereof is preferably not less than 5 $\mu$m and not more than 30 $\mu$m, more preferably not less than 5 $\mu$m and not more than 20 $\mu$m, and even more preferably not less than 5 $\mu$m and not more than 18 $\mu$m.

[Electrode substrate]

The electrode substrate is not specifically limited and may be an electrode substrate having an electrode mixed material layer that contains electrode active material particles and a binder formed on the aforementioned current collector.
Note that any electrode active material particles and binders that can be used in the field of electrochemical devices can be used without any specific limitations as the electrode active material particles and binder that are contained in the electrode mixed material layer of the electrode substrate. For example, any of those described in JP2013-145763A can be used.
A material having electrical conductivity and electrochemical durability is used as the current collector. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

<Production method of functional layer and laminate>

No specific limitations are placed on the method by which the presently disclosed functional layer and laminate are produced. For example, a method in which the functional layer is formed on a releasable sheet and then this functional layer is transferred onto the substrate may be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

[Supply step]

In the supply step, the presently disclosed composition for a functional layer set forth above is supplied onto the substrate so as to form a film of the composition for a functional layer on the substrate. The method by which the composition for a functional layer is supplied onto the substrate may be by applying the composition for a functional layer onto the surface of the substrate or by immersing the substrate in the composition for a functional layer without any specific limitations. Application of the composition for a functional layer onto the surface of the substrate is preferable because this makes it easy to control the thickness of the produced functional layer.
Examples of methods by which the composition for a functional layer can be applied onto the substrate include, but are not specifically limited to, doctor blading, reverse roll coating, direct roll coating, gravure coating, bar coating, extrusion coating, and brush coating.
Note that in the supply step, a film of the composition for a functional layer may be formed on just one side of the substrate, or films of the composition for a functional layer may be formed on both sides of the substrate.

[Drying step]

In the drying step, the film of the composition for a functional layer that has been formed on the substrate in the supply step is dried to remove the dispersion medium and form a functional layer.

The film of the composition for a functional layer can be dried by any commonly known method without any specific limitations. For example, the drying method may be drying by warm, hot, or low-humidity air, vacuum drying, or drying through irradiation with infrared light, electron beams, or the like. Although no specific limitations are placed on the drying conditions, the drying temperature is preferably 50°C to 150°C and the drying time is preferably 1 minute to 30 minutes.

Note that in production of the presently disclosed laminate, the supply step and the drying step may be performed with respect to one side of the substrate to form a functional layer, and then the supply step and the drying step may be performed with respect to the other side of the substrate to form a functional layer.

The thickness of the functional layer is preferably 0.5 $\mu$m or more, more preferably 0.8 $\mu$m or more, and even more preferably 1 $\mu$m or more, and is preferably 6 $\mu$m or less, more preferably 5 $\mu$m or less, and even more preferably 3.5 $\mu$m or less. When the thickness of the functional layer is not less than any of the lower limits set forth above, the functional layer has extremely good heat resistance. On the other hand, when the thickness of the functional layer is not more than any of the upper limits set forth above, ion diffusivity of the functional layer can be ensured, and output characteristics of an electrochemical device can be further enhanced.

[Ratio of volume-average particle diameter of particulate polymer relative to thickness of functional layer]

A ratio of the volume-average particle diameter of the particulate polymer relative to the thickness of the functional layer (volume-average particle diameter of particulate polymer/thickness of functional layer) is preferably 0.5 or more, and more preferably 1.5 or more, and is preferably 10.0 or less, more preferably 9.0 or less, and even more preferably 8.0 or less. When the ratio of the volume-average particle diameter of the particulate polymer relative to the thickness of the functional layer is not less than any of the lower limits set forth above, good wet adhesiveness can be displayed because the particulate polymer readily protrudes at a thickness direction surface of the functional layer. Moreover, when the ratio of the volume-average particle diameter of the particulate polymer relative to the thickness of the functional layer is not more than any of the upper limits set forth above, good adhesiveness can be displayed due to the presence of a larger number of adhesion points of the particulate polymer.

(Electrochemical device)

The presently disclosed electrochemical device includes electrodes and a separator, and a feature thereof is that the presently disclosed laminate set forth above is included as either or both of an electrode and a separator, and preferably as a separator. As a result of the presently disclosed electrochemical device having the presently disclosed laminate set forth above as at least one electrochemical device member among an electrode and a separator, the presently disclosed electrochemical device has excellent output characteristics and has long service life since deformation of the electrochemical device caused by expansion and contraction of an electrode active material in accompaniment to charging and discharging can be inhibited.

Note that in the electrochemical device in which the laminate is used, the particulate polymer that is contained in the functional layer of the laminate may maintain a particulate form or may have any other form.

The presently disclosed electrochemical device may be a lithium ion secondary battery, an electric double-layer capacitor, or a lithium ion capacitor, for example, without any specific limitations, and is preferably a lithium ion secondary battery.

The following description gives a lithium ion secondary battery as one example of the presently disclosed electrochemical device and describes a case in which the presently disclosed laminate set forth above is used as a separator of the lithium ion secondary battery, but the presently disclosed electrochemical device is not limited thereto.

<Positive electrode and negative electrode>

Electrodes that are formed of known electrode substrates (positive electrode substrate and negative electrode substrate) such as previously described in the "Substrate" section can be used as a positive electrode and a negative electrode.

<Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used.

Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

Various measurements and evaluations in the examples and comparative examples were performed as follows.

<Degree of swelling in electrolyte solution>

A particulate polymer was shaped into a film of approximately 0.1 mm in thickness, approximately 2 cm-square of this film was cut out, and the weight thereof (pre-immersion weight) was measured. Thereafter, the film was immersed in electrolyte solution at a temperature of 60°C for 72 hours. The immersed film was then pulled up, electrolyte solution was wiped off, and the weight of the film (post-immersion weight) was promptly measured. A value of (post-immersion weight)/(pre-immersion weight) × 100(%) was taken to be the degree of swelling in electrolyte solution. Note that a solution obtained by dissolving $LiPF_6$ with a concentration of 1 mol/L in a mixed solvent of 1:1 (volume ratio) ethylene carbonate and diethylene carbonate was used as the electrolyte solution.

<Volume-average particle diameter of polymer>

The volume-average particle diameter of a polymer (particulate polymer or binder (other polymer)) was measured by laser diffraction. Specifically, a produced water dispersion containing the polymer (adjusted to solid content concentration of 0.1 mass%) was taken to be a sample. In a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

<Glass-transition temperature of polymer>

A measurement sample was weighed into an aluminum pan in an amount of 10 mg and was then measured using a differential scanning calorimeter (EXSTAR DSC6220 produced by SII NanoTechnology Inc.) under conditions prescribed in JIS Z8703 with a measurement temperature range of -100°C to 500°C and a heating rate of 10°C/min, and with an empty aluminum pan as a reference to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

Note that since two glass-transition temperatures were measured for a particulate polymer in Example 3, the glass-transition temperature was taken to be a value calculated by the following formula:

$$\text{Glass-transition temperature} = (\text{Glass-transition temperature originating from hydrogenated isoprene block} \times \text{Content of hydrogenated isoprene block} + \text{Glass-transition temperature originating from hydrogenated styrene block} \times \text{Content of hydrogenated styrene block})/(\text{Content of hydrogenated isoprene block} + \text{Content of hydrogenated styrene block}).$$

<Percentage hydrogenation of particulate polymer>

The amount of carbon-carbon unsaturated bonds was determined by $^1$H-NMR spectroscopy for each of a pre-hydrogenation polymer and a post-hydrogenation polymer, and then the percentage hydrogenation (%) was calculated based on the difference between the amounts of carbon-carbon unsaturated bonds before and after hydrogenation. Note that o-dichlorobenzene was used as a solvent, and a JMN-AL series AL400 (produced by JEOL, Ltd.) was used as an NMR spectrometer in the $^1$H-NMR spectroscopy.

<Process adhesiveness (dry adhesiveness) of functional layer>

A produced positive electrode and functional layer-equipped separator were each cut out as 10 mm in width and 50 mm in length, and then the positive electrode and the functional layer-equipped separator were stacked and were pressed by roll pressing under conditions of a temperature of 70°C, a load of 10 kN/m, and a pressing rate of 30 m/min to obtain a joined product in which the positive electrode and the functional layer-equipped separator were joined together.

The obtained joined product was placed with the surface at the current collector-side of the positive electrode facing downward, and cellophane tape was attached to the surface of the positive electrode. Tape prescribed by JIS Z1522 was used as the cellophane tape. Moreover, the cellophane tape was fixed to a horizontal test stage in advance. Thereafter, one end of the functional layer-equipped separator was pulled vertically upward at a pulling speed of 50 mm/min to peel of the separator, and the stress during this peeling was measured.

In addition, the same operations as when a positive electrode was used were performed with respect to a produced negative electrode so as to measure the stress.

The stress measurement described above was performed 10 times in total for 5 joined products of a positive electrode and a functional layer-equipped separator and 5 joined products of a negative electrode and a functional layer-equipped separator, an average value of the stress was determined, and the obtained average value was taken to be the peel strength (N/m).

The calculated peel strength was used to evaluate the process adhesiveness between an electrode and a functional layer-equipped separator by the following standard. A larger peel strength indicates higher process adhesiveness (adhesiveness of members in a production process of a battery).

A: Peel strength of 6 N/m or more
B: Peel strength of not less than 4 N/m and less than 6 N/m

# EP 4 300 695 A1

C: Peel strength of not less than 2 N/m and less than 4 N/m
D: Peel strength of less than 2 N/m

<Adhesiveness after immersion in electrolyte solution (wet adhesiveness) of functional layer>

A composition for a functional layer was applied onto a separator substrate and then the composition for a functional layer on the separator substrate was dried at 50°C for 10 minutes to form a functional layer. A separator including this functional layer was used as a separator for evaluation. The separator for evaluation was cut out with a strip shape of 10 mm × 100 mm. The separator was arranged along the surface at the negative electrode mixed material layer-side of the negative electrode with the functional layer in-between and was then subjected to 6 minutes of hot pressing at a temperature of 85°C and a pressure of 0.5 MPa to produce a laminate including the negative electrode and the separator, which was then taken to be a test specimen.
The test specimen was placed in laminate packing with approximately 400 μL of electrolyte solution. After 1 hour, the test specimen was pressed, together with the laminate packing, at 60°C and with a pressure of 0.5 MPa for 15 minutes. The test specimen was held at a temperature of 60°C for 1 day after the pressing. Note that a solution obtained by dissolving $LiPF_6$ as a supporting electrolyte with a concentration of 1 mol/L in a mixed solvent of EC, DEC, and vinylene carbonate (VC) (EC/DEC/VC (volume mixing ratio at 25°C) = 68.5/30/1.5) was used as the electrolyte solution.
The test specimen was then taken out, and electrolyte solution on the surface of the test specimen was wiped off. Next, the test specimen was placed with the surface at the current collector-side of the negative electrode facing downward, and cellophane tape was attached to the surface at the current collector-side of the negative electrode. Tape prescribed by JIS Z1522 was used as the cellophane tape. Moreover, the cellophane tape was fixed to a horizontal test stage in advance. Thereafter, one end of the separator was pulled vertically upward at a pulling speed of 50 mm/min to peel of the separator, and the stress during this peeling was measured. This measurement was made three times. An average value for the stress was determined as the peel strength P2 and was evaluated by the following standard. A larger peel strength P2 indicates that a functional layer has better adhesiveness in electrolyte solution and that there is stronger close adherence between a negative electrode and a functional layer-equipped separator.

A: Peel strength P2 of 4 N/m or more
B: Peel strength P2 of not less than 3 N/m and less than 4 N/m
C: Peel strength P2 of not less than 2 N/m and less than 3 N/m
D: Peel strength P2 of less than 2 N/m

<Process characteristics (ratio of good products)>

A total of 100 measurements were made in accordance with the method described above in the "Process adhesiveness (dry adhesiveness) of functional layer" section. The number of samples for which the peel strength was less than 1 N/m was counted and was evaluated by the following standard. A smaller number indicates a higher ratio of good products and better process characteristics.

A: 0
B: Not less than 1 and less than 3
C: Not less than 3 and less than 6
D: 6 or more

<Output characteristics>

A produced lithium ion secondary battery was constant-current constant-voltage (CC-CV) charged to 4.40 V in an atmosphere having a temperature of 25°C for cell preparation. The prepared cell was discharged to 3.0 V by 0.2C and 3.0C constant-current methods, and the electric capacities were determined. A discharge capacity maintenance rate expressed by the ratio of the electric capacities (= (electric capacity at 3.0C/electric capacity at 0.2C) × 100(%)) was determined. This measurement was performed for 5 lithium ion secondary battery cells. An average value of the respective discharge capacity maintenance rates of the cells was determined and was evaluated by the following standard. A larger average value for the discharge capacity maintenance rate indicates that a secondary battery has better output characteristics.

A: Average value for discharge capacity maintenance rate of 90% or more
B: Average value for discharge capacity maintenance rate of not less than 85% and less than 90%

15

C: Average value for discharge capacity maintenance rate of not less than 75% and less than 85%

D: Average value for discharge capacity maintenance rate of less than 75%

<Cycle characteristics>

A produced lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage 3.00 V by a 0.2C constant-current method at a temperature of 25°C. Thereafter, CC-CV charging (upper limit cell voltage 4.40 V) was performed by a 0.2C constant-current method, and then CC discharging was performed to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.40 V to 3.00 V and a charge/discharge rate of 1.5C in an environment having a temperature of 25°C. The discharge capacity of the 1st cycle was defined as X1, and the discharge capacity of the 100th cycle was defined as X2.

A capacity maintenance rate $\Delta C'$ (= (X2/X1) $\times$ 100(%)) was determined using the discharge capacity X1 and the discharge capacity X2 and was evaluated by the following standard. A larger value for the capacity maintenance rate $\Delta C'$ indicates that a secondary battery has better cycle characteristics and longer service life.

A: Capacity maintenance rate $\Delta C'$ of 93% or more

B: Capacity maintenance rate $\Delta C'$ of not less than 90% and less than 93%

C: Capacity maintenance rate $\Delta C'$ of not less than 87% and less than 90%

D: Capacity maintenance rate $\Delta C'$ of less than 87%

(Example 1)

<Production of particulate polymer (A)>

A polymerization reactor that had been internally dried and purged with nitrogen was charged with 2.0 parts (1% relative to total amount of monomer used in polymerization) of a monomer mixture formed of 29% of tetracyclododecene (TCD), 30% of dicyclopentadiene (DCPD), and 41% of norbornene (NB), 785 parts of dehydrated cyclohexane, 1.21 parts of 1-hexene as a molecular weight modifier, 0.98 parts of an n-hexane solution of diethylaluminum ethoxide (concentration: 19%), and 11.7 parts of a toluene solution of (phenylimido)tungsten tetrachloride tetrahydrofuran. These materials were stirred at 50°C for 10 minutes.

Next, the entire contents of the reactor were held at 50°C and were stirred while performing continuous dropwise addition of 198.0 parts of a monomer mixture having the same chemical composition as described above into the polymerization reactor over 150 minutes. Stirring was continued for 30 minutes after completion of the dropwise addition, and then 4 parts of isopropyl alcohol was added to end the polymerization reaction. Upon measurement of the polymerization reaction solution by gas chromatography, the conversion rate of monomer to polymer was determined to be 100%.

Next, 300 parts of the obtained polymerization reaction solution was transferred to an autoclave equipped with a stirrer, and then 32 parts of cyclohexane and 3.8 parts of nickel catalyst supported on diatomaceous earth carrier (T8400RL produced by Nikki Chemical Co., Ltd.; supported nickel content: 58%) were added. The inside of the autoclave was purged with hydrogen, and a reaction was subsequently carried out at 190°C with a hydrogen pressure of 4.5 MPa for 6 hours.

Once the hydrogenation reaction had ended, pressurized filtration was performed at a pressure of 0.25 MPa using a pressurized filter (FUNDA Filter produced by Ishikawajima-Harima Heavy Industries Co., Ltd.) with diatomaceous earth (Radiolite® #500 (Radiolite is a registered trademark in Japan, other countries, or both)) as a filter bed to obtain a colorless transparent solution.

After adding 0.5 parts of pentaerythritol tetrakis[3-(3,5-di-t-butyl-4-hydroxyphenyl)propionate] (produced by Ciba Specialty Chemicals; product name: Irganox® 1010 (Irganox is a registered trademark in Japan, other countries, or both)) as an antioxidant per 100 parts of hydrogenated polymer to this solution, foreign substances were removed by filtration using a filter (Zeta Plus® 30H (Zeta Plus is a registered trademark in Japan, other countries, or both) produced by CUNO Inc.; pore diameter: 0.5 $\mu$m to 1 $\mu$m) and a metal fiber filter (produced by Nichidai Corporation; pore diameter: 0.4 $\mu$m).

Next, the obtained filtrate was loaded into a cylindrical evaporator (produced by Hitachi, Ltd.), and, after removal of cyclohexane serving as a solvent and other volatile components, was extruded as strands in a molten state from a die directly connected to the evaporator, was water cooled, and was subsequently cut by a pelletizer (OSP-2 produced by Osada Seisakusho) to yield pellets of a resin (A).

The degree of swelling in electrolyte solution, glass-transition temperature, and percentage hydrogenation of the resin (A) were measured. The results are shown in Table 1.

Thereafter, 90 parts of cyclohexane and 10 parts of the pellets of the resin (A) obtained as described above were loaded into a vessel equipped with a stirrer, and the pellets were completely dissolved to obtain a resin solution.

Next, a colloidal dispersion liquid (A) containing magnesium hydroxide as a metal hydroxide was produced by gradually adding an aqueous solution (A2) of 2.8 parts of sodium hydroxide dissolved in 50 parts of deionized water to an aqueous solution (A1) of 4.0 parts of magnesium chloride dissolved in 200 parts of deionized water under stirring.

A particulate polymer (A) was then produced by a dissolution and suspension method. Specifically, the resin solution obtained as described above was added to the colloidal dispersion liquid (A) containing magnesium hydroxide and was further stirred therewith to obtain a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the resin solution in the colloidal dispersion liquid (A) containing magnesium hydroxide.

Next, the colloidal dispersion liquid (A) containing magnesium hydroxide was loaded into a vessel equipped with a stirrer and was subjected to thermal-vacuum distillation so as to remove cyclohexane in the system and yield a water dispersion containing a particulate polymer (A).

The water dispersion containing the particulate polymer (A) was stirred while performing dropwise addition of sulfuric acid at room temperature (25°C) so as to perform acid washing until the pH reached 6.5 or lower. Next, filtration was performed, 500 parts of deionized water was added to the resultant solid content to reform a slurry, and then water washing treatment (washing, filtration, and dehydration) was repeated a number of times. Filtration was then performed, the resultant solid content was loaded into a vessel of a dryer, and 48 hours of drying was performed at 40°C to obtain a dried particulate polymer (A).

The particle diameter of the obtained particulate polymer (A) was measured. The result is shown in Table 1.

<Production of water dispersion containing binder (other polymer)>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The volume-average particle diameter and glass-transition temperature of the obtained binder (α) were measured. The results are shown in Table 1.

<Production of slurry composition>

A pre-mixing slurry was obtained by adding 0.5 parts of polyacrylic acid as a dispersant to 100 parts of alumina (AKP3000 produced by Sumitomo Chemical Co., Ltd.; volume-average particle diameter: 0.7 μm) as inorganic fine particles, performing mixing thereof using a ball mill, further adding 6 parts in terms of solid content of the water dispersion containing the binder (α) and 1.5 parts of carboxymethyl cellulose as a thickener (viscosity modifier), and adjusting the solid content concentration to 55% through addition of deionized water.

A mixture obtained by adding 0.2 parts of sodium dodecylbenzenesulfonate (NEOPELEX G-15 produced by Kao Corporation) as an emulsifier relative to 100 parts of the particulate polymer (A) and mixing these materials such that the solid content concentration was 20% was added to the pre-mixing slurry obtained as described above. Deionized water was added so as to adjust the solid content concentration to 40% and yield a slurry composition (composition for a functional layer) in which the mixing ratio of the inorganic particles (alumina) and the particulate polymer (A) was a mixing ratio indicated in Table 1.

<Production of functional layer-equipped separator>

A microporous membrane made of polyethylene (thickness: 12 μm) was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator including functional layers at both sides of the separator substrate. Each of the functional layers had a thickness of 3.0 μm.

<Production of positive electrode>

A slurry composition for a positive electrode was produced by mixing 100 parts of $LiCoO_2$ (volume-average particle diameter: 12 μm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methyl-2-pyrrolidone as a solvent, adjusting the total solid content concentration to 70%, and mixing these materials in a planetary mixer.
The slurry composition for a positive electrode was applied onto aluminum foil of 20 μm in thickness serving as a current collector by a comma coater such as to have a thickness after drying of approximately 150 μm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 μm).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing the target binder for a negative electrode mixed material layer.
After blending 80 parts of artificial graphite (volume-average particle diameter: 15.6 μm) as a negative electrode active material (1) and 16 parts of a silicon-based active material $SiO_x$ (volume-average particle diameter: 4.9 μm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were further mixed at 25°C for 60 minutes. The solid content concentration was then further adjusted to 62% with deionized water, and a further 15 minutes of mixing was performed at 25°C to obtain a mixture. Deionized water and 1.5 parts in terms of solid content of the water dispersion containing the binder for a negative electrode mixed material layer were added to this mixture, the final solid content concentration was adjusted to 52%, and a further 10 minutes of mixing was performed to obtain a mixture. This mixture was subjected to defoaming under reduced pressure to yield a slurry composition for a negative electrode having good fluidity.
The slurry composition for a negative electrode was applied onto copper foil of 20 μm in thickness serving as a current collector by a comma coater such as to have a thickness after drying of approximately 150 μm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 μm).
The functional layer-equipped separator, positive electrode, and negative electrode obtained as described above were used to evaluate the dry adhesiveness, wet adhesiveness, and ratio of good products. The results are shown in Table 1.

<Production of lithium ion secondary battery>

The post-pressing positive electrode produced as described above was cut out as a rectangle of 49 cm × 5 cm and was placed with the surface at the positive electrode mixed material layer-side thereof facing upward. The functional layer-equipped separator was cut out as 120 cm × 5.5 cm and was arranged on the positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side thereof faced toward the functional layer-equipped separator and the negative electrode was positioned at the other longitudinal direction side of the functional layer-equipped separator. The resultant laminate was wound using a winding machine to obtain a roll.

This roll was pressed into a flattened form at 70°C and 1 MPa and was enclosed in an aluminum packing case serving as a battery case. Electrolyte solution (solvent: ethylene carbonate/diethyl carbonate/vinylene carbonate (volume ratio) = 68.5/30/1.5; electrolyte: $LiPF_6$ of 1 mol in concentration) was injected such that no air remained. An opening of the aluminum packing case was closed by heat sealing at a temperature of 150°C to produce a wound lithium ion secondary battery having a capacity of 800 mAh.

The obtained lithium ion secondary battery was used to evaluate secondary battery output characteristics and cycle characteristics. The results are shown in Table 1.

(Example 2)

A particulate polymer, a binder, a slurry composition, a functional layer-equipped separator, a positive electrode, a negative electrode, and a lithium ion secondary battery were produced in the same way as in Example 1 with the exception that a particulate polymer (B) produced in the same manner as the particulate polymer (A) but with the chemical composition of the monomer mixture changed to 22% of tetracyclododecene (TCD), 22% of dicyclopentadiene (DCPD), and 56% of norbornene (NB) was used instead of the particulate polymer (A). Various evaluations were performed in the same way as in Example 1. The results are shown in Table 1.

(Example 3)

A particulate polymer, a binder, a slurry composition, a functional layer-equipped separator, a positive electrode, a negative electrode, and a lithium ion secondary battery were produced in the same way as in Example 1 with the exception that a particulate polymer (C) produced as described below was used instead of the particulate polymer (A). Various evaluations were performed in the same way as in Example 1. The results are shown in Table 1.

<Production of particulate polymer (C)>

A reactor that had been thoroughly internally purged with nitrogen and that included a stirrer was charged with 550 parts of dehydrated cyclohexane, 15.0 parts of dehydrated styrene, and 0.475 parts of n-dibutyl ether. The entire contents of the reactor were stirred at 60°C while 0.83 parts of n-butyllithium (15% cyclohexane solution) was added to initiate polymerization and were reacted for 60 minutes under stirring at 60°C. Upon measurement of the reaction liquid by gas chromatography, the polymerization conversion rate at this point was determined to be 99.5%.

Thereafter, 70.0 parts of dehydrated isoprene was added to the reaction liquid, and stirring was continued at 60°C for a further 30 minutes. Upon measurement of the reaction liquid by gas chromatography, the polymerization conversion rate at this point was determined to be 99%.

Thereafter, 15.0 parts of dehydrated styrene was added to the reaction liquid, and the entire contents of the reactor were stirred at 60°C for 60 minutes. Upon measurement of the reaction liquid by gas chromatography, the polymerization conversion rate at this point was determined to be almost 100%.

The reaction was ended at this point through addition 0.5 parts of isopropyl alcohol.

Next, the polymer solution was transferred to a pressure-resistant reactor including a stirrer, and then 4.0 parts of nickel catalyst supported on diatomaceous earth carrier (produced by JGC Catalysts and Chemicals Ltd.; product name: E22U; supported nickel content: 60%) as a hydrogenation catalyst and 100 parts of dehydrated cyclohexane were added and mixed. The inside of the reactor was purged with hydrogen gas, and the solution was stirred while supplying hydrogen into the reactor and performing a hydrogenation reaction at a temperature of 170°C and a pressure of 4.5 MPa for 6 hours.

A hydrogenated block copolymer [D] that was obtained through the hydrogenation reaction had a weight-average molecular weight (Mw) of 52,500 and a molecular weight distribution (Mw/Mn) of 1.04.

Once the hydrogenation reaction had ended, the reaction liquid was filtered to remove the hydrogenation catalyst, and then 1.0 parts of a xylene solution having 0.05 parts of pentaerythritol tetrakis[3-(3,5-di-t-butyl-4-hydroxyphenyl)propionate] (Songnox 1010 produced by KOYO Chemical Research Center), which is a phenolic antioxidant, dissolved therein was added to the filtrate and caused to dissolve.

Next, the solution was filtered sequentially using a Zeta Plus® filter 30H (produced by CUNO Inc.; pore diameter: 0.5 $\mu$m to 1 $\mu$m) and then using a separate metal fiber filter (produced by Nichidai Corporation; pore diameter: 0.4 $\mu$m) to remove fine solid content. Thereafter, a cylindrical evaporator (Kontro produced by Hitachi, Ltd.) was used to remove cyclohexane and xylene serving as solvents and other volatile components from the solution at a temperature of 260°C and a pressure of 0.001 MPa or lower. The resultant product was extruded as strands in a molten state from a die directly connected to the evaporator, was cooled, and was subsequently cut by a pelletizer to obtain 95 parts of pellets of a hydrogenated block copolymer (styrene-isoprene-styrene block copolymer).

The obtained hydrogenated block copolymer had a weight-average molecular weight (Mw) of 51,900 and a molecular weight distribution (Mw/Mn) of 1.05.

The degree of swelling in electrolyte solution, glass-transition temperature, and percentage hydrogenation of the hydrogenated block copolymer were measured. The results are shown in Table 1. Note that two glass-transition temperatures were observed at -50°C (originating from hydrogenated isoprene block) and 135°C (originating from hydrogenated styrene block).

Thereafter, 90 parts of cyclohexane and 10 parts of the pellets of the hydrogenated block copolymer obtained as described above were loaded into a vessel equipped with a stirrer, and the pellets were completely dissolved to obtain a resin solution.

In addition, a colloidal dispersion liquid (A) containing magnesium hydroxide as a metal hydroxide was produced by gradually adding an aqueous solution (A2) of 2.8 parts of sodium hydroxide dissolved in 50 parts of deionized water to an aqueous solution (A1) of 4.0 parts of magnesium chloride dissolved in 200 parts of deionized water under stirring.

A particulate polymer (C) was then produced by a dissolution and suspension method. Specifically, the resin solution obtained as described above was added to the colloidal dispersion liquid (C) containing magnesium hydroxide and was further stirred therewith to obtain a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the resin solution in the colloidal dispersion liquid (A) containing magnesium hydroxide.

Next, the colloidal dispersion liquid (A) containing magnesium hydroxide was loaded into a vessel equipped with a stirrer and was subjected to thermal-vacuum distillation so as to remove cyclohexane in the system and yield a water dispersion containing a particulate polymer (C).

The water dispersion containing the particulate polymer (C) was stirred while performing dropwise addition of sulfuric acid at room temperature (25°C) so as to perform acid washing until the pH reached 6.5 or lower. Next, filtration was performed, 500 parts of deionized water was added to the resultant solid content to reform a slurry, and then water washing treatment (washing, filtration, and dehydration) was repeated a number of times. Filtration was then performed, the resultant solid content was loaded into a vessel of a dryer, and 48 hours of drying was performed at 40°C to obtain a dried particulate polymer (C).

The particle diameter of the obtained particulate polymer (C) was measured. The result is shown in Table 1.

(Example 4)

A particulate polymer, a binder, a slurry composition, a functional layer-equipped separator, a positive electrode, a negative electrode, and a lithium ion secondary battery were produced in the same way as in Example 1 with the exception that 2.5 parts of sodium dodecylbenzenesulfonate was used instead of the colloidal dispersion liquid (A) containing magnesium hydroxide as a metal hydroxide in production of the particulate polymer (A) and that production of a slurry composition and production of a functional layer-equipped separator were performed as described below. Various evaluations were performed in the same way as in Example 1. The results are shown in Table 1.

<Production of slurry composition>

[Production of heat-resistant layer slurry composition]

A heat-resistant layer slurry composition was obtained by adding 0.5 parts of polyacrylic acid as a dispersant to 100 parts of alumina (AKP3000 produced by Sumitomo Chemical Co., Ltd.; volume-average particle diameter: 0.7 $\mu$m) as inorganic fine particles, performing mixing thereof using a ball mill, further adding 6 parts in terms of solid content of the water dispersion containing the binder ($\alpha$) and 1.5 parts of carboxymethyl cellulose as a thickener (viscosity modifier), and adjusting the solid content concentration to 40% through addition of deionized water.

[Production of adhesive layer slurry composition]

An adhesive layer slurry was obtained by adding 20 parts in terms of solid content of the water dispersion

containing the binder ($\alpha$) to 100 parts of the particulate polymer and further adding deionized water to adjust the solid content concentration to 5%.

<Production of functional layer-equipped separator>

A microporous membrane made of polyethylene (thickness: 12 $\mu$m) was prepared as a separator substrate. The heat-resistant layer slurry composition obtained as described above was applied onto one side of the separator substrate by bar coating. Next, the separator substrate with the heat-resistant layer slurry composition applied thereon was dried at 50°C for 1 minute to form a heat-resistant functional layer. Next, the adhesive layer slurry composition obtained as described above was applied using a bar coater. The separator substrate with the adhesive layer slurry composition applied thereon was dried at 50°C for 1 minute to form an adhesive functional layer. The same operations were performed with respect to the other side of the separator substrate to produce a functional layer-equipped separator including heat-resistant functional layers and adhesive functional layers at both sides of the separator substrate. Note that in each of the functional layers, the thickness of the heat-resistant functional layer was 3.0 $\mu$m and the mass per unit area of the adhesive functional layer was 0.25 g/m$^2$.

(Comparative Example 1)

A particulate polymer, a binder, a slurry composition, a functional layer-equipped separator, a positive electrode, a negative electrode, and a lithium ion secondary battery were produced in the same way as in Example 1 with the exception that a particulate polymer (E) produced as described below was used instead of the particulate polymer (A). Various evaluations were performed in the same way as in Example 1. The results are shown in Table 1.

<Production of particulate polymer (E)>

A monomer composition was produced by mixing 81 parts of styrene as an aromatic vinyl monomer, 16 parts of 2-ethylhexyl acrylate as a (meth)acrylic acid ester monomer, and 3 parts of ethylene glycol dimethacrylate as a cross-linkable monomer.

In addition, a colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8.0 parts of magnesium chloride dissolved in 200 parts of deionized water under stirring.

A particulate polymer (A) was then produced by suspension polymerization. Specifically, the monomer composition obtained as described above was added to the colloidal dispersion liquid (A) containing magnesium hydroxide, was further stirred therewith, and then 2.0 parts of t-butyl peroxy-2-ethylhexanoate (PERBUTYL® O (PERBUTYL is a registered trademark in Japan, other countries, or both) produced by NOF Corporation) as a polymerization initiator was added to obtain a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition in the colloidal dispersion liquid (A) containing magnesium hydroxide.

The colloidal dispersion liquid (A) containing magnesium hydroxide was then loaded into a reactor, was heated to 90°C, and was subjected to a polymerization reaction for 5 hours to yield a water dispersion containing a particulate polymer (E).

The water dispersion containing the particulate polymer (E) was stirred while performing dropwise addition of sulfuric acid at room temperature (25°C) so as to perform acid washing until the pH reached 6.5 or lower. Next, filtration was performed, 500 parts of deionized water was added to the resultant solid content to reform a slurry, and then water washing treatment (washing, filtration, and dehydration) was repeated a number of times. Filtration was then performed, the resultant solid content was loaded into a vessel of a dryer, and 48 hours of drying was performed at 40°C to obtain a dried particulate polymer (E).

The particle diameter of the obtained particulate polymer (E) was measured. The result is shown in Table 1.

(Comparative Example 2)

A particulate polymer, a binder, a slurry composition, a functional layer-equipped separator, a positive electrode, a negative electrode, and a lithium ion secondary battery were produced in the same way as in Example 1 with the exception that a particulate polymer (F) produced in the same manner as the particulate polymer (A) but with the hydrogenation reaction time changed to 3 hours was used instead of the particulate polymer (A). Various evaluations were performed in the same way as in Example 1. The results are shown in Table 1.

(Comparative Example 3)

A particulate polymer, a binder, a slurry composition, a functional layer-equipped separator, a positive electrode, a negative electrode, and a lithium ion secondary battery were produced in the same way as in Example 4 with the exception that sodium dodecylbenzenesulfonate was set as 4.2 parts. Various evaluations were performed in the same way as in Example 1. The results are shown in Table 1.

(Comparative Example 4)

A particulate polymer, a binder, a slurry composition, a functional layer-equipped separator, a positive electrode, a negative electrode, and a lithium ion secondary battery were produced in the same way as in Example 1 with the exception that a colloidal dispersion liquid (H) containing magnesium hydroxide as a metal hydroxide that was produced by gradually adding an aqueous solution (H2) of 2.3 parts of sodium hydroxide dissolved in 50 parts of deionized water to an aqueous solution (H1) of 3.3 parts of magnesium chloride dissolved in 200 parts of deionized water under stirring was used instead of the colloidal dispersion liquid (A) containing magnesium hydroxide as a metal hydroxide in production of the particulate polymer (A). Various evaluations were performed in the same way as in Example 1. The results are shown in Table 1.

[Table 1]

| | Example 1 | Example 2 | Example 3 | Example 4 | Comparative Example 1 | Comparative Example 2 | Comparative Example 3 | Comparative Example 4 |
|---|---|---|---|---|---|---|---|---|
| | | | | | | | | |

| | | | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Particulate polymer | Chemical composition | Structural units derived from tetracyclododecene [mass%] | 29 | 22 | - | 29 | - | 29 | 29 | 29 |
| | | Structural units derived from dicyclopentadiene [mass%] | 30 | 22 | - | 30 | - | 30 | 30 | 30 |
| | | Structural units derived from norbornene [mass%] | 41 | 56 | - | 41 | - | 41 | 41 | 41 |
| | | Structural units derived from isoprene [mass%] | - | - | 70 | - | - | - | - | - |
| | | Structural units derived from styrene [mass%] | - | - | 30 | - | 81 | - | - | - |
| | | Structural units derived from 2-ethylhexyl acrylate [mass%] | - | - | - | - | 16 | - | - | - |
| | | Structural units derived from ethylene glycol dimethacrylate [mass%] | - | - | - | - | 3 | - | - | - |
| | Percentage hydrogenation [%] | | ≥99 | ≥99 | ≥99 | ≥99 | 0 | 90 | ≥99 | ≥99 |
| | Degree of swelling in electrolyte solution [%] | | 110 | 110 | 110 | 110 | 150 | 150 | 110 | 110 |
| | Glass-transition temperature [°C] | | 60 | 40 | 6 | 60 | 66 | 60 | 60 | 60 |
| | Volume-average particle diameter [μm] | | 5 | 5 | 5 | 0.5 | 5 | 5 | 0.3 | 12 |
| | Amount [parts by mass] | | 100 | 100 | 100 | 100 | 100 | 100 | 100 | 100 |

EP 4 300 695 A1

24

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Other polymer (binder) | Glass-transition temperature [°C] | -30 | -30 | -30 | -30 | -30 | -30 | -30 | -30 |
| | Volume-average particle diameter [μm] | 0.25 | 0.25 | 0.25 | 0.25 | 0.25 | 0.25 | 0.25 | 0.25 |
| | Amount [parts by mass/100 parts by mass of non-conductive heat-resistant particles] | 6 | 6 | 6 | 6 | 6 | 6 | 6 | 6 |
| Non-conductive heat-resistant particles | Type | Alumina | Alumina | Alumina | Alumina | Alumina | Alumina | Alumina | Alumina |
| | Proportion (non-conductive heat-resistant particles/ particulate polymer + non-conductive heat-resistant particles) [mass%] | 90 | 90 | 90 | 96 | 90 | 90 | 90 | 90 |
| | Proportion (non-conductive heat-resistant particles/ particulate polymer + non-conductive heat-resistant particles) [volume%] | 70 | 70 | 70 | 86 | 70 | 70 | 70 | 70 |
| Functional layer | Thickness [μm] | 3 | 3 | 3 | 3 | 3 | 3 | 3 | 3 |
| Evaluation | Dry adhesiveness | A | A | A | B | B | A | C | C |
| | Wet adhesiveness | A | B | A | B | C | C | C | C |
| | Ratio of good products | A | A | A | B | A | A | C | C |
| | Output characteristics | A | A | B | B | C | C | C | B |
| | Cycle characteristics | A | B | A | B | C | C | C | C |

EP 4 300 695 A1

It can be seen from Table 1 that a functional layer for an electrochemical device that has excellent wet adhesiveness and that can cause an electrochemical device to display high output characteristics is obtained in Examples 1 to 4. Moreover, Comparative Examples 1 and 2 in Table 1 demonstrate that output characteristics deteriorate in a case in which a particulate polymer has a large degree of swelling in electrolyte solution, Comparative Example 3 in Table 1 demonstrates that wet adhesiveness and output characteristics deteriorate in a case in which a particulate polymer has a small volume-average particle diameter, and Comparative Example 4 in Table 1 demonstrates that wet adhesiveness and cycle characteristics deteriorate in a case in which a particulate polymer has a large volume-average particle diameter.

INDUSTRIAL APPLICABILITY

According to the present disclosure, a functional layer for an electrochemical device that has excellent wet adhesiveness and can cause an electrochemical device to display high output characteristics and a composition for an electrochemical device functional layer that can form this functional layer for an electrochemical device are obtained.

Moreover, according to the present disclosure, a laminate for an electrochemical device that has excellent wet adhesiveness and can cause an electrochemical device to display high output characteristics is obtained.

Furthermore, according to the present disclosure, an electrochemical device that has high output characteristics and long service life is obtained.

**Claims**

1. A composition for an electrochemical device functional layer comprising a particulate polymer having a volume-average particle diameter of not less than 0.5 $\mu$m and not more than 10 $\mu$m and a degree of swelling in electrolyte solution of 120% or less.

2. The composition for an electrochemical device functional layer according to claim 1, wherein the particulate polymer includes a hydrogenated polymer.

3. The composition for an electrochemical device functional layer according to claim 2, wherein the hydrogenated polymer has a percentage hydrogenation of 95% or more.

4. The composition for an electrochemical device functional layer according to any one of claims 1 to 3, wherein the particulate polymer has a glass-transition temperature of not lower than 0°C and not higher than 80°C.

5. The composition for an electrochemical device functional layer according to any one of claims 1 to 4, further comprising another polymer differing from the particulate polymer.

6. The composition for an electrochemical device functional layer according to claim 5, wherein the other polymer has a lower glass-transition temperature than the particulate polymer.

7. The composition for an electrochemical device functional layer according to any one of claims 1 to 6, further comprising non-conductive heat-resistant particles.

8. A functional layer for an electrochemical device formed using the composition for an electrochemical device functional layer according to any one of claims 1 to 6.

9. A laminate for an electrochemical device comprising the functional layer for an electrochemical device according to claim 8 at one side or both sides of a substrate.

10. The laminate for an electrochemical device according to claim 9, wherein the substrate is a separator substrate.

11. An electrochemical device comprising the laminate for an electrochemical device according to claim 9 or 10.

## INTERNATIONAL SEARCH REPORT

International application No.

**PCT/JP2022/004119**

### A. CLASSIFICATION OF SUBJECT MATTER

***H01M 50/403***(2021.01)i; ***H01G 11/00***(2013.01)i; ***H01G 11/52***(2013.01)i; ***H01M 4/02***(2006.01)i; ***H01M 4/13***(2010.01)i;
***H01M 50/414***(2021.01)i; ***H01M 50/434***(2021.01)i; ***H01M 50/443***(2021.01)i; ***H01M 50/446***(2021.01)i;
***H01M 50/451***(2021.01)i; ***H01M 50/457***(2021.01)i; ***H01M 50/489***(2021.01)i

FI: H01M50/403 D; H01M4/02 Z; H01M4/13; H01G11/52; H01G11/00; H01M50/443 B; H01M50/443 E; H01M50/414;
H01M50/489; H01M50/434; H01M50/443 M; H01M50/446; H01M50/457; H01M50/451

According to International Patent Classification (IPC) or to both national classification and IPC

### B. FIELDS SEARCHED

Minimum documentation searched (classification system followed by classification symbols)

H01M50/403; H01G11/00; H01G11/52; H01M4/02; H01M4/13; H01M50/414; H01M50/434; H01M50/443; H01M50/446;
H01M50/451; H01M50/457; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-192340 A (MITSUI CHEMICALS INC.) 31 October 2019 (2019-10-31) claims, examples | 1, 5, 8-11 |
| A | | 2-4, 6-7 |
| A | WO 2019/044720 A1 (ZEON CORP.) 07 March 2019 (2019-03-07) | 1-11 |
| A | WO 2018/168502 A1 (ZEON CORP.) 20 September 2018 (2018-09-20) | 1-11 |

☐ Further documents are listed in the continuation of Box C.  ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **11 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/004119**

| Patent document cited in search report | | | Publication date (day/month/year) | Patent family member(s) | | | Publication date (day/month/year) |
|---|---|---|---|---|---|---|---|
| JP | 2019-192340 | A | 31 October 2019 | (Family: none) | | | |
| WO | 2019/044720 | A1 | 07 March 2019 | US | 2021/0028458 | A1 | |
| | | | | EP | 3678224 | A1 | |
| | | | | CN | 111033815 | A | |
| | | | | KR | 10-2020-0044807 | A | |
| WO | 2018/168502 | A1 | 20 September 2018 | KR | 10-2019-0122690 | A | |

Form PCT/ISA/210 (patent family annex) (January 2015)

**EP 4 300 695 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015185353 A
- JP 2017084589 A
- JP 3235219 B
- JP 6590156 B
- JP 6435733 B
- WO 2019065416 A1
- JP 2013145763 A